# EUROPEAN PATENT SPECIFICATION

(11) **EP 2 608 627 B1**
(45) Date of publication and mention of the grant of the patent: **15.10.2014**
(21) Application number: 11194943.4
(22) Date of filing: 21.12.2011
(51) Int. Cl.: H04W 76/06

(54) **Method, node, computer program and computer program product for releasing resources**
Verfahren, Knoten, Computerprogramm und Computerprogrammprodukt zur Freigabe von Ressourcen
Procédé, noeud, programme informatique et produit de programme informatique informatique pour libérer des ressources

(43) Date of publication of application: 26.06.2013
(73) Proprietor: Telefonaktiebolaget L M Ericsson (publ), 164 83 Stockholm (SE)
(72) Inventor: Ljungberg, Malin, SE-754 30 UPPSALA (SE); Lagerqvist, Tomas Georg, SE-112 60 STOCKHOLM (SE)
(74) Representative: Kühn, Friedrich Heinrich

(56) References cited:
- WO-A1-2006/059932
- US-A1- 2010 144 363
- US-B1- 7 733 777
- 3GPP: "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP DRAFT; 23401-A50, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, 5 October 2011 (2011-10-05), XP050547996, [retrieved on 2011-10-05]
- DEUTSCHE TELEKOM ET AL: "Introduction of a Stepwise Load Reduction Indication for the Overload procedure", 3GPP DRAFT; R3-110298, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dublin, Ireland; 20110117, 18 January 2011 (2011-01-18), XP050497235, [retrieved on 2011-01-18]

## Description

### TECHNICAL FIELD

The invention relates to a controller node in a mobile communication network. In particular the invention relates to how resources are released from the controller node.

### BACKGROUND

Congestion in LTE (Long Term Evolution) can be a real issue. When congestion occurs, e.g. as measured by the number of used resources in an e-Node B (evolved Node B), this can e.g. be defined as a hard limit of utilisation, above which utilisation is not allowed (or able) to pass.

WO 2006/059932, D1, relates to control of resource utilization in a UTRAN system that make use of different types of channels and states depending on the transmission activity on specific link between the UE and the network. D1 proposes to adapt the activity level threshold for when the channel with the UE is released, and the communication possibly transferred to another type of channel, depending on the load in the total cell, on the total system resources or on the hardware utilization. D1 thereby enables adaptation of the threshold for releasing resources, such that they may be released more quickly when there is a high demand of these resources.

In common with D1, US 2010/0144363 relates to inactivity timers for release of network resources that are adaptively adjustable in relation to the cells total load. US 7733777, B1, relates to allocation of channel resources to multiple TCP sessions in a wireless network. US 7733777, seem to distribute among plural channels the capacity in terms of instantaneous sending rate according to a set of channel rates.

Despite the advantages provided in these documents there may be situations where a lot of resources, on occasion, need to be released more or less instantaneously, which in itself can create congestion due to high demands on hardware and/or radio resources for control messages. Moreover, some of the released resources will try and may be allowed to reconnect again, whereby the release and reattach occur for no reason in these cases.

It would be desirable if congestion issues in the e-Node B can be handled in such a way that sub-optimisation when resources have to be released is avoided or at least reduced.

### SUMMARY

It is an object of embodiments herein to eliminate or at least alleviate the problem discussed above.

In a first aspect, it is presented a method, performed in an evolved Node, eNodeB, being responsible for resource utilisation for the eNodeB. The method comprises the steps of: obtaining a utilisation value, being a value of resource utilisation in the controller node; determining a release rate value and an inactivity timer value based on the utilisation value; and releasing resources having been assigned by the eNodeBfor communication with at least one mobile terminal, and having been inactive for a period longer than the inactivity timer value, the resources being released at a rate being less than or equal to the release rate value.

Using the inactivity timer value combined with the release rate, a more gradual release of resources is achieved, compared to what is known in the art. This reduces the risk of utilisation quickly reaching or exceeding the maximum allowable utilisation, and this thus prevents chaotic and suboptimal release of resources.

In the step of determining, a smaller inactivity timer value may be determined for a higher utilisation value. In other words, when utilisation is higher, inactive resources can be released quicker.

In the step of determining, a greater release rate value may be determined for a higher utilisation value. In other words, when utilisation is higher, resources can be released at a faster rate. The step of determining may involve comparing the utilisation value to a threshold value.

The step of determining may involve the use of a plurality of threshold values for a respective plurality of utilisation values. More threshold values provide finer control in the balance of releasing resources immaturely and being active when utilisation is getting high.

The step of determining may comprise the use of an algebraic function defining the inactivity timer value depending on the utilisation value and an algebraic function defining the release rate value depending on the utilisation value.

The the utilisation value may be a number of established radio bearers of the eNode B. In other words, it can be the number of established radio bearers which indicates the utilisation.

The utilisation value may be a number of mobile terminals having radio bearers set up with the controller node. In other words, it can be the number of established mobile terminals which indicates the utilisation.

In the step of releasing a resource, the resource may be an established radio bearer of the controller node. Optionally, the method only releases radio sources on a radio bearer granularity.

In the step of releasing a resource, resources may be released which are radio bearers associated with a mobile terminal having radio bearers set up with the controller node. In this way, resources are released on a mobile terminal granularity.

The step of releasing a resource may use a priority indicator when determining the order in which resources are released.

The priority indicator may be a flag indicating that the resource is vulnerable for pre-emption. This is a flag which is available according to the set of LTE standards.

The inactivity timer value may be set to be infinity when the utilisation level is low. In other words, at low utilisation level, no resources are released as part of this method.

A second aspect is an evolved Node B, eNodeB, arranged to be responsible for resource utilisation for the eNodeB. The eNodeB comprises: a resource manager arranged to obtain a utilisation value, being a value of resource utilisation in the eNodeB; a processor arranged to determine a release rate value and an inactivity timer value based on the utilisation value. The resource manager is arranged to release resources having been connected to the eNodeB and having been inactive for a period longer than the inactivity timer value, the resources being released at a rate being less than or equal to the release rate value.

The eNodeB may be comprised in an evolved node B node of a Long Term Evolution mobile communication network.

A third aspect is a computer program for an eNodeB being responsible for resource utilisation for the eNodeB. The computer program comprises computer program code which, when run on the eNodeB, causes the eNodeB to: obtain a utilisation value, being a value of resource utilisation in the eNodeB; determine a release rate value and an inactivity timer value based on the utilisation value; and release resources having been assigned by the eNodeB for communication with at least one mobile terminal, and having been inactive for a period longer than the inactivity timer value, the resources being released at a rate being less than or equal to the release rate value.

A fourth aspect is a computer program product comprising a computer program according to the third aspect and a computer readable means on which the computer program is stored.

It is to be noted that any feature of any aspect may, where appropriate, be applied to any other aspects.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating an environment where embodiments presented herein can be applied;
Fig 2 is a schematic histogram illustrating how various levels of resource utilisation affect resource usage in the eNodeB of Fig 1;
Fig 3 is a flow chart illustrating a method according to one embodiment, performed in the eNodeB of Fig 1;
Fig 4 is a schematic diagram showing some components of the eNodeB, of Fig 1; and
Fig 5 shows one example of a computer program product comprising computer readable means.

### DETAILED DESCRIPTION

The invention will now be described more fully hereinafter with reference to the accompanying drawings, in which certain embodiments of the invention are shown. Alternatives falling within the scope of claims may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

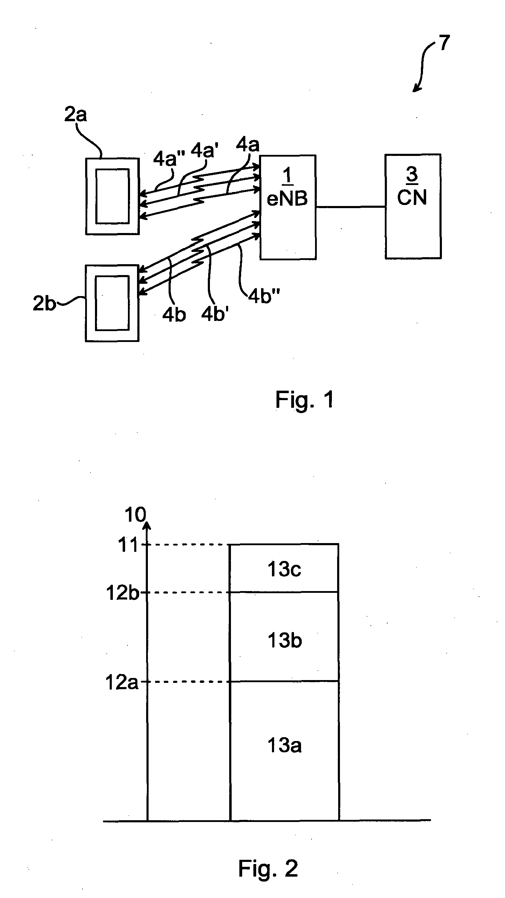

Fig 1 is a schematic diagram illustrating a mobile communication network 1 where embodiments presented herein can be applied. The mobile communications network 1 comprises a core network 3 and one or more controller nodes 1 in the form of evolved Node Bs 1, also known as e-Node Bs or eNBs. The controller nodes 1 provide radio connectivity to a plurality of mobile terminals 2a-b. The term mobile terminal is also known as user equipment, mobile communication terminal, user terminal, user agent, etc.

The mobile communication network, can e.g. comply with LTE (Long Term Evolution) or with any one or a combination of UMTS (Universal Mobile Telecommunications System), CDMA2000 (Code Division Multiple Access 2000), etc.

The communication between the first mobile terminal 2a and the controller node 1 occurs over one ore more radio bearers 4a, 4a', 4a". Analogously, the communication between the second mobile terminal 2b and the controller node 1 occurs over one ore more radio bearers 4b, 4b', 4b". Each mobile terminal in LTE needs to allocate a minimum of two radio bearers comprising one signaling radio bearers and one default radio bearer. Optionally, more radio bearers can be set up for each mobile terminal. In the example of Fig 1, three radio bearers are shown for between the respective mobile terminals 2a-b and the controller node 1.

Fig 2 is a schematic histogram illustrating how various levels of resource utilisation affect resource usage in the controller node of Fig 1. The vertical axis indicates utilisation value 10. The utilisation value 10 can e.g. be the number of established radio bearers in the controller node or the number of mobile terminals having radio bearers set up with the controller node. There is a maximum limit 11 (also known as hard limit, although this can be configurable) of how high the utilisation is allowed to go. One concept of embodiments presented herein will now be described, where the controller node goes into congestion handling at a level lower than the maximum limit 11. This is done by introducing a congestion threshold, which is lower than the hard limit, and to start releasing inactive pre-emptable resources when this limit is reached.

According to the ideas presented herein, there is thus also a lower threshold value 12a and a higher threshold value 12b. This creates three zones 13a-c of utilisation: a low utilisation zone 13a, a medium utilisation zone 13b and a high utilisation zone.

Depending on the level of utilisation, as indicated by which one of the zones 13a-c, a release rate value and an inactivity timer value are determined. The inactivity timer indicates how long a resource can be inactive until it is released and the release rate indicates the maximum rate at which resources are allowed to be released. By using the release rate, the bursty behaviour of the conventional radio bearer pre-emption mechanism is reduced through the flow control of the release rate use. The flow control of the release rate can be implemented with a mechanism ensuring that, after a resource has been pre-empted, the process waits certain amount of time before another resource is considered for pre-emption. The release rate value and inactivity timer value can be configured independently for the three zones to achieve desired congestion handling.

The general idea is that for utilisation values in the low zone 13a, utilisation is low and unused resources can remain established to reduce set-up time when the resource needs to be used again.

For utilisation values in the medium zone 13b, utilisation is somewhat higher, and for example the inactivity timer can be set to a lower value, whereby inactive resources are released sooner.

For utilisation values in the high zone 13c, utilisation is high, whereby can be set the inactivity timer to an even lower value and the release rate can be set higher, allowing resources to be released quickly to avoid reaching the maximum limit 11.

An advantage of the presented embodiment is that more resources can be considered for pre-emption (release) as the utilisation value approaches the maximum limit 11. This allows for a more precise calibration of the workings of the early congestion threshold algorithm to a specific overload traffic pattern.

While Fig 2 shows an example with three zones, the concepts presented herein are equally applicable to other number of zones, including two, four, five, etc.

Alternatively, the zones 13a-c can be replaced with two algebraic functions defining the release rate and inactivity timer values as a function of the utilisation value, respectively.

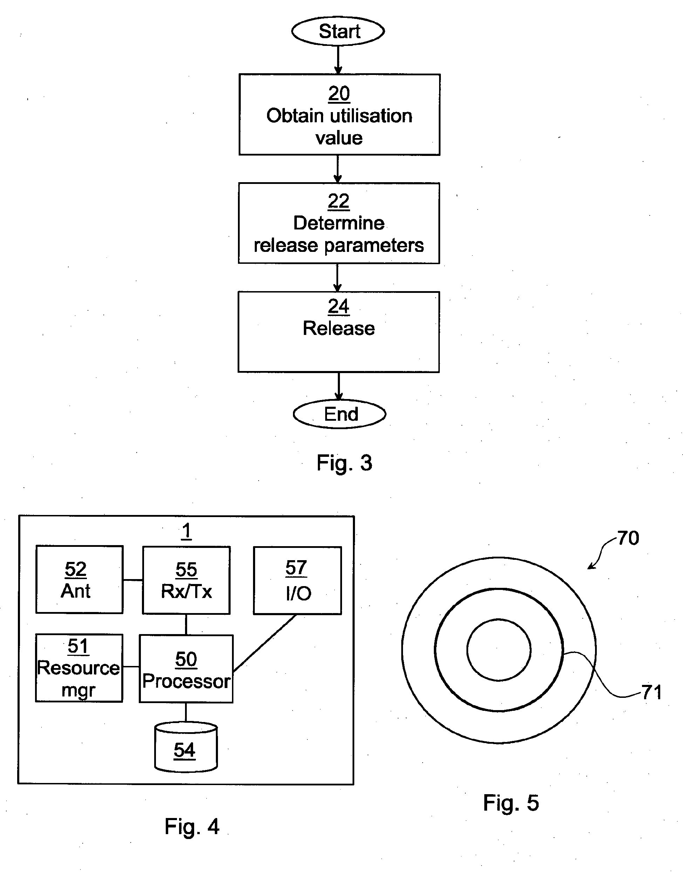

Fig 3 is a flow chart illustrating a method according to one embodiment, performed in the controller node of Fig 1. In many ways, the method works as described above with reference to Fig 2.

In an obtain utilisation value step 20, a utilisation value is obtained, where the utilisation value is a value of resource utilisation in the controller node. In one embodiment, the controller node is an evolved Node B and the utilisation value reflects the number of established radio bearers of the evolved Node B. In one embodiment, the utilisation value is a number of mobile terminals having radio bearers set up with the controller node.

In a determine release parameters step 22, the release rate value and the inactivity timer value are determined based on the utilisation value. A higher utilisation value can result in a smaller inactivity timer value, leading to a quicker action to release unused resources. A higher utilisation value can also result in a greater release rate. In other words, a higher utilisation can result in actions to release resources faster. In one embodiment, the inactivity timer value is set to infinity when the utilisation level is low, whereby no resources are released in such a situation.

The determining can involve the use of one or more threshold values as explained with reference to Fig 2 above. Alternatively, an algebraic function can be used to define the release rate value and/or inactivity timer value. In this way, a predefined analytic function can be used for this determining.

In a release step 24, resources having been assigned by the controller node for communication with at least one mobile terminal are released. These resources are released when they have been inactive for a period longer than the inactivity timer value, at a rate being less than or equal to the release rate value. In other words, the release rate value is not exceeded.

Each one of the resources that are released can for example be an established radio bearer of the controller node. Alternatively, each one of the resources that are released can be radio bearers associated with a mobile terminal having radio bearers set up with the controller node.

It is to be noted that the type of resources that are released can, but does not need to, differ from the source of the utilisation value. In other words, a utilisation value can be the number of established radio bearers while the resources being released can be at the granularity of all radio bearers for a mobile terminal. Alternatively, the utilisation value can be the number of mobile terminals having radio bearers set up with the controller node while the resources being released can be individual radio bearers.

Optionally, a priority indicator can be used to determine the order in which resources are released. For example, the priority indicator can be a flag indicating that the resource is vulnerable for pre-emption, such that resources that are indicated to be vulnerable for pre-emption are released first, as defined in the 3GPP standard (TS 23.401, Section 4.7.3)

Fig 4 is a schematic diagram showing some components of the controller node 1 of Fig 1. A processor 50 is provided using any suitable central processing unit (CPU), multiprocessor, pool of processors, microcontroller, digital signal processor (DSP), application specific integrated circuit etc., capable of executing software instructions stored in a computer program product 54, e.g. in the form of a memory. The computer program product 54 can be a memory or any combination of read and write memory (RAM) and read only memory (ROM). The memory also comprises persistent storage, which, for example, can be any single one or combination of magnetic memory, optical memory, solid state memory or even remotely mounted memory.

The controller node 1 also comprises an I/O interface 57 for communicating with the core network and optionally with other controller nodes.

The controller node 1 also comprises one or more transceivers 55, comprising analogue and digital components, and a corresponding number of antennas 52 for radio communication with mobile terminals.

A resource manager 51 is also part of the controller node 1. The resource manager 51 is arranged to obtain a utilisation value in accordance with what is described above with reference to the flow chart of Fig 3. The resource manager 51 is a module which can be implemented using hardware and/or software, such as a computer program executed by the processor 50.

Other components of the controller node are omitted in order not to obscure the concepts presented herein.

Fig 5 shows one example of a computer program product 70 comprising computer readable means. On this computer readable means, a computer program 71 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied as a memory of a device, such as the computer program product 54 of Fig 4. While the computer program 71 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the patent claims.

## Claims

1. A method, performed in a eNodeB (1) being responsible for resource utilisation for the eNodeB (1), the method comprising the steps of:
obtaining a utilisation value (20), being a value of resource utilisation in the eNodeB;
determining an inactivity timer value (22) based on the utilisation value; **characterized by**
the determining step also comprising determining a release rate value based on the utilisation value
releasing resources (24) having been assigned by the eNodeB for communication with at least one mobile terminal, and having been inactive for a period longer than the inactivity timer value, the resources being released at a rate being less than or equal to the release rate value.

2. The method according to claim 1, wherein in the step of determining (22), a smaller inactivity timer value is determined for a higher utilisation value.

3. The method according to claim 1 or 2, wherein in the step of determining (22), a greater release rate value is determined for a higher utilisation value.

4. The method according to any one of the preceding claims, wherein the step of determining (22) involves comparing the utilisation value to a threshold value.

5. The method according to any one of the preceding claims, wherein the step of determining (22) involves the use of a plurality of threshold values for a respective plurality of utilisation values.

6. The method according to any one of claims 1 to 3, wherein the step of determining (22) comprises the use of an algebraic function defining the inactivity timer value depending on the utilisation value and an algebraic function defining the release rate value depending on the utilisation value.

7. The method according to any one of the preceding claims, wherein the eNodeB is an evolved Node B and the utilisation value is a number of established radio bearers (4a, 4a', 4a", 4b, 4b', 4b") of the evolved Node B (1).

8. The method according to any one of claims 1 to 6, wherein the utilisation value is a number of mobile terminals (2a-b) having radio bearers (4a, 4a', 4a", 4b, 4b', 4b") set up with the eNodeB (1).

9. The method according to any one of the preceding claims, wherein in the step of releasing a resource (24), the resource is an established radio bearer (4a, 4a', 4a", 4b, 4b', 4b") of the eNodeB (1).

10. The method according to any one of claims 1 to 8, wherein in the step of releasing a resource (24), resources are released which are radio bearers (4a, 4a', 4a", 4b, 4b', 4b") associated with a mobile terminal (2a-b) having radio bearers set up with the eNodeB (1).

11. The method according to any one of the preceding claims, wherein the step of releasing a resource (24) uses a priority indicator when determining the order in which resources are released.

12. The method according to claim 11, wherein the priority indicator is a flag indicating that the resource is vulnerable for pre-emption.

13. The method according to any one of the preceding claims, wherein the inactivity timer value is set to be infinity when the utilisation level is low.

14. A eNodeB (1) arranged to be responsible for resource utilisation for the eNodeB (1), the eNodeB comprising:
a resource manager (51) arranged to obtain a utilisation value, being a value of resource utilisation in the eNodeB;
a processor (50) arranged to determine an inactivity timer value based on the utilisation value; **characterized by** said processor (50) also is arranged to determine a release rate value based on the utilisation value, and by
the resource manager (51) further is arranged to release resources having been connected to the eNodeB and having been inactive for a period longer than the inactivity timer value, the resources being released at a rate being less than or equal to the release rate value.

15. The eNodeB according to claim 14, wherein the eNodeB (1) is comprised in an evolved node B node of a Long Term Evolution mobile communication network.

16. A computer program (71) for a eNodeB being responsible for resource utilisation for the eNodeB (1), the computer program comprising computer program code which, when run on the eNodeB, causes the eNodeB to:
obtain a utilisation value, being a value of resource utilisation in the eNodeB;
determine an inactivity timer value based on the utilisation value; **characterized by** said computer program (71) further causes the eNodeB to: determine a release rate value based on the utilisation value, and
release resources having been assigned by the eNodeB for communication with at least one mobile terminal, and having been inactive for a period longer than the inactivity timer value, the resources being released at a rate being less than or equal to the release rate value.

17. A computer program product (70) comprising a computer program according to claim 16 and a computer readable means on which the computer program is stored.

## Patentansprüche

1. Verfahren, durchgeführt in einem eNodeB (1), der für die Ressourcennutzung für den eNodeB (1) verantwortlich ist, wobei das Verfahren die Schritte umfasst:
Erlangen eines Nutzungswerts (20), der ein Wert der Ressourcennutzung im eNodeB ist;
Bestimmen eines Inaktivitätszeitgeberwerts (22) auf der Grundlage des Nutzungswerts;
**gekennzeichnet:**
**dadurch, dass** der Bestimmungsschritt außerdem umfasst: Bestimmen eines Freigabegeschwindigkeitswerts auf der Grundlage des Nutzungswerts;
durch Freigeben von Ressourcen (24), die durch den eNodeB für eine Kommunikation mit mindestens einem mobilen Endgerät zugewiesen worden sind und für eine Periode, die länger als der Inaktivitätszeitgeberwert ist, inaktiv gewesen sind, wobei die Ressourcen mit einer Geschwindigkeit freigegeben werden, die kleiner als der oder gleich dem Freigabegeschwindigkeitswert ist.

2. Verfahren nach Anspruch 1, worin im Schritt des Bestimmens (22) für einen höheren Nutzungswert ein kleinerer Inaktivitätszeitgeberwert bestimmt wird.

3. Verfahren nach Anspruch 1 oder 2, worin im Schritt des Bestimmens (22) für einen höheren Nutzungswert ein größerer Freigabegeschwindigkeitswert bestimmt wird.

4. Verfahren nach einem der vorhergehenden Ansprüche, worin der Schritt des Bestimmens (22) einbezieht: Vergleichen des Nutzungswerts mit einem Schwellwert.

5. Verfahren nach einem der vorhergehenden Ansprüche, worin der Schritt des Bestimmens (22) die Verwendung einer Vielzahl von Schwellwerten für eine entsprechende Vielzahl von Nutzungswerten einbezieht.

6. Verfahren nach einem der Ansprüche 1 bis 3, worin der Schritt des Bestimmens (22) die Verwendung einer algebraischen Funktion, die den Inaktivitätszeitgeberwert in Abhängigkeit vom Nutzungswert definiert, und einer algebraischen Funktion, die den Freigabegeschwindigkeitswert in Abhängigkeit vom Nutzungswert definiert, umfasst.

7. Verfahren nach einem der vorhergehenden Ansprüche, worin der eNodeB ein Evolved Node B ist und der Nutzungswert eine Anzahl von eingerichteten Funkträgem (4a, 4a', 4a", 4b, 4b', 4b") des Evolved Node B (1) ist.

8. Verfahren nach einem der Ansprüche 1 bis 6, worin der Nutzungswert eine Anzahl von mobilen Endgeräten (2a-b) ist, die mit dem eNodeB (1) Funkträger (4a, 4a', 4a", 4b, 4b', 4b") eingerichtet haben.

9. Verfahren nach einem der vorhergehenden Ansprüche, worin im Schritt des Freigebens einer Ressource (24) die Ressource ein eingerichteter Funkträger (4a, 4a', 4a", 4b, 4b', 4b") des eNodeB (1) ist.

10. Verfahren nach einem der Ansprüche 1 bis 8, worin im Schritt des Freigebens einer Ressource (24) Ressourcen freigegeben werden, die Funkträger (4a, 4a', 4a", 4b, 4b', 4b") sind, die einem mobilen Endgerät (2a-b) zugeordnet sind, das mit dem eNodeB (1) Funkträger eingerichtet hat.

11. Verfahren nach einem der vorhergehenden Ansprüche, worin der Schritt des Freigebens einer Ressource (24) einen Prioritätsindikator verwendet, wenn die Reihenfolge bestimmt wird, in der Ressourcen freigegeben werden.

12. Verfahren nach Anspruch 11, worin der Prioritätsindikator ein Flag ist, das kennzeichnet, dass die Ressource für Zwangstrennung anfällig ist.

13. Verfahren nach einem der vorhergehenden Ansprüche, worin der Inaktivitätszeitgeberwert auf unendlich gesetzt wird, wenn der Nutzungsgrad niedrig ist.

14. eNodeB (1), dafür eingerichtet, für die Ressourcennutzung für den eNodeB (1) verantwortlich zu sein, wobei der eNodeB umfasst:
einen Ressourcenmanager (51), der dafür eingerichtet ist, einen Nutzungswert zu erlangen, der ein Wert der Ressourcennutzung im eNodeB ist;
einen Prozessor (50), der dafür eingerichtet ist, auf der Grundlage des Nutzungswerts einen Inaktivitätszeitgeberwert zu bestimmen; **dadurch gekennzeichnet, dass** der Prozessor (50) ferner dafür eingerichtet ist, auf der Grundlage des Nutzungswerts einen Freigabegeschwindigkeitswert zu bestimmen, und dadurch,
dass der Ressourcenmanager (51) ferner dafür eingerichtet ist, Ressourcen freizugeben, die mit dem eNodeB verbunden worden sind und für eine Periode, die länger als der Inaktivitätszeitgeberwert ist, inaktiv gewesen sind, wobei die Ressourcen mit einer Geschwindigkeit freigegeben werden, die kleiner als der oder gleich dem Freigabegeschwindigkeitswert ist.

15. eNodeB nach Anspruch 14, worin der eNodeB (1) in einen Evolved-Node-B-Knoten eines Long-Term-Evolution-Mobilkommunikationsnetzwerks einbezogen ist.

16. Computerprogramm (71) für einen eNodeB, der für die Ressourcennutzung für den eNodeB (1) verantwortlich ist, wobei das Computerprogramm Computerprogrammcode umfasst, der, wenn er auf dem eNodeB ausgeführt wird, bewirkt, dass der eNodeB:
einen Nutzungswert erlangt, der ein Wert der Ressourcennutzung im eNodeB ist;
einen Inaktivitätszeitgeberwert auf der Grundlage des Nutzungswerts bestimmt;
**dadurch gekennzeichnet, dass** das Computerprogramm (71) ferner bewirkt, dass der eNodeB:
auf der Grundlage des Nutzungswerts einen Freigabegeschwindigkeitswert bestimmt, und
Ressourcen freigibt, die durch den eNodeB für eine Kommunikation mit mindestens einem mobilen Endgerät zugewiesen worden sind und für eine Periode, die länger als der Inaktivitätszeitgeberwert ist, inaktiv gewesen sind, wobei die Ressourcen mit einer Geschwindigkeit freigegeben werden, die kleiner als der oder gleich dem Freigabegeschwindigkeitswert ist.

17. Computerprogrammprodukt (70), das ein Computerprogramm nach Anspruch 16 und ein computerlesbares Mittel, auf dem das Computerprogramm gespeichert ist, umfasst.

## Revendications

1. Procédé, exécuté dans un eNodeB (1), responsable de l'utilisation de ressources pour l'eNodeB (1), le procédé comprenant les étapes suivantes :
obtenir une valeur d'utilisation (20), qui est une valeur d'utilisation de ressources dans l'eNodeB ;
déterminer une valeur du timer d'inactivité (22) sur la base de la valeur d'utilisation ;
**caractérisé**
**en ce que** l'étape de détermination comprend également de déterminer une valeur de vitesse de libération sur la base de la valeur d'utilisation ;
par la libération de ressources (24) ayant été assignées par l'eNodeB pour une communication avec au moins un terminal mobile, et ayant été inactives pendant une période plus longue que la valeur du timer d'inactivité, les ressources étant libérées à une vitesse inférieure ou égale à la valeur de la vitesse de libération.

2. Procédé selon la revendication 1, dans lequel dans l'étape de détermination (22), une valeur de timer d'inactivité inférieure est déterminée pour une valeur d'utilisation supérieure.

3. Procédé selon la revendication 1 ou la revendication 2, dans lequel dans l'étape de détermination (22), une valeur de vitesse de libération supérieure est déterminée pour une valeur d'utilisation supérieure.

4. Procédé selon l'une quelconque des revendications précédentes, dans lequel l'étape de détermination (22) implique de comparer la valeur d'utilisation à une valeur seuil.

5. Procédé selon l'une quelconque des revendications précédentes, dans lequel l'étape de détermination (22) implique l'utilisation d'une pluralité de valeurs seuil pour une pluralité de valeurs d'utilisation respectives.

6. Procédé selon l'une quelconque des revendications 1 à 3, dans lequel l'étape de détermination (22) comprend l'utilisation d'une fonction algébrique définissant la valeur du timer d'inactivité en fonction de la valeur d'utilisation et d'une fonction algébrique définissant la valeur de la vitesse de libération en fonction de la valeur d'utilisation.

7. Procédé selon l'une quelconque des revendications précédentes, dans lequel l'eNodeB est un noeud B évolué et la valeur d'utilisation est un nombre de porteuses radio établies (4a, 4a', 4a", 4b, 4b', 4b") du Noeud B évolué (1).

8. Procédé selon l'une quelconque des revendications 1 à 6, dans lequel la valeur d'utilisation est un nombre de terminaux mobiles (2a-b) ayant des porteuses radio (4a, 4a', 4a", 4b, 4b', 4b") installées avec l'eNodeB (1).

9. Procédé selon l'une quelconque des revendications précédentes, dans lequel dans l'étape de libération d'une ressource (24), la ressource est une porteuse radio établie (4a, 4a', 4a", 4b, 4b', 4b") de l'eNodeB (1).

10. Procédé selon l'une quelconque des revendications 1 à 8, dans lequel dans l'étape de libération d'une ressource (24), des ressources sont libérées, lesquelles sont des porteuses radio (4a, 4a', 4a", 4b, 4b', 4b") associées à un terminal mobile (2a-b) ayant des porteuses radio installées avec l'eNodeB (1).

11. Procédé selon l'une quelconque des revendications précédentes, dans lequel l'étape de libération d'une ressource (24) utilise un indicateur de priorité lorsque l'ordre dans lequel des ressources sont libérées est déterminé.

12. Procédé selon la revendication 11, dans lequel l'indicateur de priorité est un indicateur indiquant que la ressource est vulnérable relativement à une préemption.

13. Procédé selon l'une quelconque des revendications précédentes, dans lequel la valeur du timer d'inactivité est définie pour être infinie lorsque le niveau d'utilisation est bas.

14. ENodeB (1) conçu pour être responsable de l'utilisation de ressources pour l'eNodeB (1), l'eNodeB comprenant :
un gestionnaire de ressources (51) conçu pour obtenir une valeur d'utilisation, qui est une valeur d'utilisation de ressources dans l'eNodeB ;
un processeur (50) conçu pour déterminer une valeur de timer d'inactivité sur la base de la valeur d'utilisation ; **caractérisé en ce que** ledit processeur (50) est également conçu pour déterminer une valeur de vitesse de libération sur la base de la valeur d'utilisation, et **en ce que** :
le gestionnaire de ressources (51) est en outre conçu pour libérer des ressources ayant été connectées à l'eNodeB et ayant été inactives pendant une période plus longue que la valeur du timer d'inactivité, les ressources étant libérées à une vitesse inférieure ou égale à la valeur de la vitesse de libération.

15. eNodeB selon la revendication 14, dans lequel l'eNodeB (1) est compris dans un noeud B de noeud évolué d'un réseau de communication mobile à évolution à long terme.

16. Programme informatique (71) destiné à un eNodeB responsable de l'utilisation de ressources pour l'eNodeB (1), le programme informatique comprenant un code de programme informatique qui, lorsqu'il est exécuté sur l'eNodeB, amène l'eNodeB à :
obtenir une valeur d'utilisation, qui est une valeur d'utilisation de ressources dans l'eNodeB ;
déterminer une valeur du timer d'inactivité sur la base de la valeur d'utilisation ;
**caractérisé en ce que** ledit programme informatique (71) amène en outre l'eNodeB à :
déterminer une valeur de vitesse de libération sur la base de la valeur d'utilisation, et
libérer des ressources ayant été assignées par l'eNodeB pour une communication avec au moins un terminal mobile, et ayant été inactives pendant une période plus longue que la valeur du timer d'inactivité, les ressources étant libérées à une vitesse inférieure ou égale à la valeur de la vitesse de libération.

17. Produit programme informatique (70) comprenant un programme informatique selon la revendication 16 et un support lisible par ordinateur sur lequel le programme informatique est stocké.
